Europäisches Patentamt

European Patent Office

Office européen des brevets

(11) Veröffentlichungsnummer: **0 480 272 A1**

# EUROPÄISCHE PATENTANMELDUNG

(21) Anmeldenummer: **91116623.9**

(22) Anmeldetag: **30.09.91**

(51) Int. Cl.5: **G11B 5/845**, G11B 5/84, G11B 5/852

(30) Priorität: **10.10.90 DE 4032129**

(43) Veröffentlichungstag der Anmeldung:
**15.04.92 Patentblatt 92/16**

(84) Benannte Vertragsstaaten:
**DE FR GB NL**

(71) Anmelder: **BASF Magnetics GmbH**
**Dynamostrasse 3**
**W-6800 Mannheim 1(DE)**

(72) Erfinder: **Veitch, Ronald John, Dr.**
**Carl-Schumann-Ring 18**
**W-6701 Maxdorf(DE)**

Erfinder: **Soehring Gerhard**
**Horrackerstrasse 23**
**W-6940 Weinheim(DE)**
Erfinder: **Jakusch, Helmut, Dr.**
**Lorscher Ring 6c**
**W-6710 Frankenthal(DE)**
Erfinder: **Koch, Volker, Dr.**
**Am Hipperling 3**
**W-6719 Battenberg(DE)**

(74) Vertreter: **Langfinger, Klaus-Dieter, Dr. et al**
**BASF AG Carl-Bosch-Strasse 38**
**W-6700 Ludwigshafen(DE)**

(54) Verfahren und Vorrichtung zur stochastischen Ausrichtung magnetischer Aufzeichnungsträger.

(57) Die Erfindung betrifft ein Verfahren zur Herstellung von magnetischen Aufzeichnungsträgern mit einer stochastischen Ausrichtung der magnetischen anisotropen Teilchen in der Magnetschicht mit Hilfe einer, über der noch flüssigen Dispersionsschicht rotierenden, radial angeordnete Permanentmagnete alternierender Polung enthaltenden Magnettrommel sowie eine entsprechende Vorrichtung zur Durchführung des Verfahrens.

FIG. 2

EP 0 480 272 A1

Die Erfindung betrifft ein Verfahren zur Herstellung von magnetischen Aufzeichnungsträgern mit einer stochastischen Ausrichtung der magnetischen anisotropen Teilchen in der Magnetschicht sowie eine Vorrichtung zur Durchführung des Verfahrens.

Zur Herstellung schichtförmiger magnetischer Aufzeichnungsträger werden magnetisch anisotrope Teilchen, dispergiert in einem Bindemittelsystem, in Form dieser Dispersion auf ein Trägermaterial aufgebracht und das Bindemittel verfestigt. Diese bekannten Verfahren beinhalten meist die einachsige Ausrichtung der magnetisch anisotropen Teilchen mit Hilfe eines entsprechend gestalteten äußeren Magnetfeldes parallel zu bei der Benutzung des Aufzeichnungsträgers vorgegebenen Aufzeichnungsrichtung. Die auf diese Weise erreichbare Anhebung der remanenten Magnetisierung verbessert die Aufzeichnungseigenschaften in der üblicherweise longitudinalen Aufzeichnungsrichtung.

Durch eine Vielzahl neuer, bei streifenförmigen Aufzeichnungsmedien von der longitudinalen Aufzeichnungsrichtung abweichender Aufzeichnungsverfahren einerseits und durch die Benutzung scheibenförmiger magnetischer Aufzeichnungsträger, bei denen die Informationen in konzentrischen kreisförmigen Spuren aufgezeichnet werden andererseits, hat es nicht an Versuchen gefehlt, die bei den üblichen Beschichtungstechniken mit magnetischen Teilchen enthaltenden Dispersionen durch deren Fließen entstehende, wenn auch nur geringe, so doch störende Vorzugsrichtung der Magnetisierung in Beschichtungsrichtung zu vermeiden.

So wird in der US-A 4208447 ein Verfahren beschrieben, bei dem eine Folge von magnetischen Feldern unterschiedlicher Feldrichtung und abnehmender Feldstärke in Laufrichtung des beschichteten Trägers auf diesen einwirkt. In ähnlicher Weise wird auch gemäß der DE-A 3347460 vorgegangen. An diesen Verfahren ist jedoch nachteilig, daß ihre Wirkung abhängig ist von der jeweiligen Beschaffenheit der Dispersion und auch von den magnetischen Parametern des magnetischen Materials, der Schichtstärke, der Laufgeschwindigkeit des beschichteten Bandes. Gleiches gilt auch für die in der DE-A 36 00 076 offenbarten Anordnung, bei der Magnete wechselnder Polung schräg zur Laufrichtung angebracht sind. Um dieses Problem zu lösen, wird entsprechend der US-A 47 91 032, ein von der Koerzitivfeldstärke des magnetischen Materials abhängiges Wechselfeld mit einer von der Laufgeschwindigkeit der beschichteten Bahn abhängigen Frequenz angewandt. Doch auch hier ist der Einfluß der Dispersionseigenschaften nicht ausreichend berücksichtigt und bedarf gegebenenfalls einer apparativen Änderung. Es sind zwar noch weitere Lösungsversuche bekannt, so z. B. gemäß der DE-A 27 48 215 die Ausbildung schmaler, streifenförmiger Zonen mit unterschiedlichen Winkel zwischen 60 und 120 ° bildender Ausrichtung oder gemäß der US-A 4 518 627 die Desorientierung der Magnetteilchen durch eine rotierende Scheibe mit einer planaren Anordnung von Magneten wechselnder Feldrichtung, doch können diese in keiner Weise befriedigen. Sie sind beispielsweise entweder bei scheibenförmigen Aufzeichnungsträgern, insbesondere im Falle hochdichter Informationsspeicherung, zu wenig sensitiv oder aber erfordern sie riesige rotierende Scheiben bzw. ermöglichen nur geringe Beschichtungsbreiten.

Es bestand daher die Aufgabe, ein Verfahren zur Herstellung magnetischer Aufzeichnungsträger mit stochastischer Ausrichtung der magnetisch anisotropen Teilchen bereitzustellen, welches die vorgenannten Nachteile nicht aufweist und sich insbesondere auf einfache und schnelle Weise an unterschiedliche Verfahrensparameter hinsichtlich eingesetzter Dispersion und Beschichtungsmodus anpassen läßt.

Es wurde nun gefunden, daß sich mit einem Verfahren zur Herstellung von magnetischen Aufzeichnungsträgern mit einer stochastischen Ausrichtung der magnetisch anisotropen Teilchen in der Magnetschicht durch schichtförmiges Aufbringen einer, im wesentlichen aus den in einer Lösung eines organischen Bindemittelsystems feinverteilten magnetischen Teilchen bestehenden Dispersion auf ein flexibles Trägermaterial, desorientieren der magnetisch anisotropen Teilchen in der Schicht durch eine, mit Magneten einer unterschiedlichen Polarität und mit in der Bewegungsrichtung der magnetischen Schicht abnehmenden Feldstärke versehenen Anordnung und anschließendes Verfestigen der magnetisierbaren Schicht die Aufgabe lösen läßt, wenn auf die Dispersionsschicht das Magnetfeld einer rotierenden Magnettrommel mit einer die Mantelfläche der Magnettrommel im wesentlichen bedeckenden Anzahl von radial angeordneten Magneten alternierender Polarität einwirkt.

Gegenstand der Erfindung ist außerdem eine Vorrichtung zur Durchführung des erfindungsgemäßen Verfahrens. Diese Vorrichtung zur stochastischen Ausrichtung der magnetisch anisotropen Teilchen in der schichtförmig aufgebrachten Dispersion besteht aus einer über die ganze Breite des beschichteten Trägermaterials sich erstreckenden, drehbar angeordneten Trommel, bestehend aus einer Achse, einem inneren zylinderförmigen Teil aus weichmagnetischen Material und einem unmittelbar sich darüber anschließenden Hohlzylinder aus unmagnetischem Material mit einer die Mantelfläche des Hohlzylinders im wesentlichen bedeckenden Anzahl von radial angeordneten Durchbrüchen, üblicherweise Bohrungen, in welchen alternierend Magnete derart angeordnet sind, daß das Magnetfeld aus der Mantelfläche des äußeren Zylinders senkrecht austritt.

In einer weiteren Ausgestaltung der erfindungsgemäßen Vorrichtung läßt sich sowohl die Drehbewegung des rotierenden Zylinders als auch der Abstand des Zylinders von dem planar angeordneten, sich unter dem rotierenden Zylinder entlang bewegenden, mit der Dispersion beschichteten Trägermaterial, unabhängig voneinander oder auch jeweils allein oder gemeinsam in Abhängigkeit von einer, die stochastische Ausrichtung der magnetischen Teilchen erfassenden Meßgröße regeln.

Sind die magnetisch anisotropen Teilchen in der Magnetschicht stochastisch ausgerichtet, so kann das magnetische Aufzeichnungsmaterial besonders vorteilhaft zum Herstellen von magnetischen Aufnahmescheiben, sog. Floppy Disk, dienen, die nicht durch eine Modulation beeinträchtigt sind, die bei magnetischen Scheiben auftritt, die aus magnetischem Material hergestellt sind, dessen magnetische Teilchen in einer Transportrichtung orientiert sind.

Weitere Vorteile, Einzelheiten und Merkmale des erfindungsgemäßen Verfahrens und der Vorrichtung ergeben sich anhand der nachfolgenden Beschreibung, eines bevorzugten Ausführungsbeispiels gemäß der Erfindung und anhand der Zeichnungen.

Dabei zeigen:

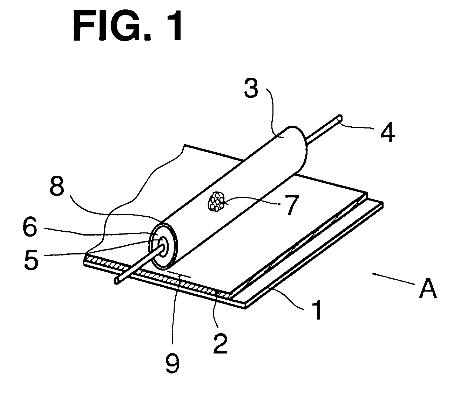

Fig. 1: Eine schematische Darstellung einer Anordnung und Vorrichtung zum stochastischen Ausrichten gemäß vorliegender Erfindung.

Fig. 2: Eine schematische Darstellung einer vorteilhaften Ausgestaltung des erfindungsgemäßen Verfahrens.

Fig. 3: Eine beispielhafte Darstellung des Magnetfeldverlaufs.

Ein nichtmagnetisches, bahnförmiges flexibles Trägermaterial 1, das sich kontinuierlich in Richtung A bewegt, ist gleichmäßig mit einer Dispersionsschicht 2, welche die magnetisch anisotropen Teilchen feinverteilt in einem organischen Bindemittelsystem enthält, versehen. Die magnetischen Teilchen liegen in der Dispersionsschicht zwar in einem weitgehend ungeordneten Verteilungsgrad vor, da sie jedoch meist nadelförmig sind, entsteht bereits beim Auftragen der Dispersion in Fließrichtung eine geringe Längsorientierung. Die Dispersionsschicht wird deshalb der Einwirkung einer der stochastischen Ausrichtung dienende Vorrichtung 3 unterworfen, welche im Abstand 9 über der Dispersionsschicht angeordnet ist. Anschließend wird durch Trocknen, d. h. Verdampfen des Lösungsmittels und/oder Vernetzen der Bindemittelkomponente die Dispersionsschicht zur Magnetschicht verfestigt.

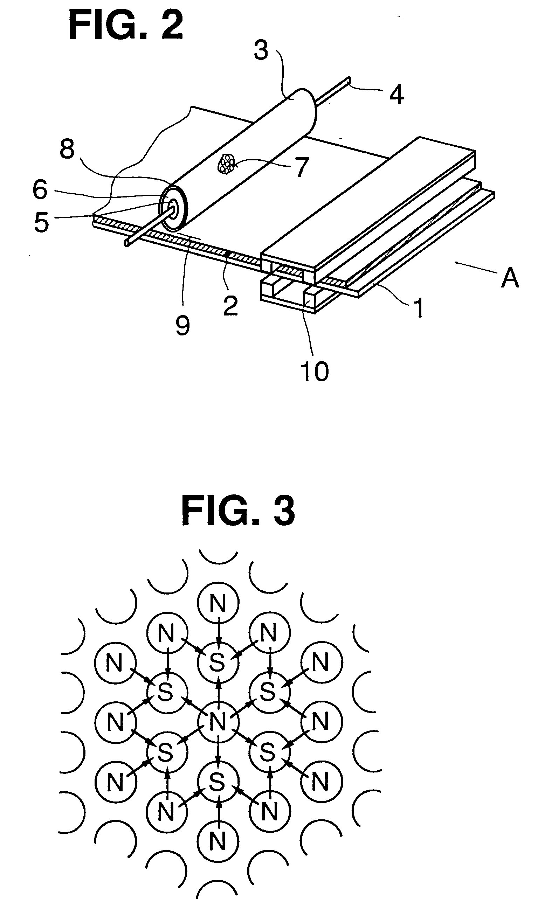

Die der stochastischen Ausrichtung dienende Vorrichtung 3 besteht aus einer, mit einem regelbaren Antrieb versehenen Achse 4, einem inneren zylinderförmigen Teil 5 aus weichmagnetischem Material, im allgemeinen aus sogenannten Weicheisen, und einem darüber angeordneten Hohlzylinder 6, der aus unmagnetischem Material besteht und eine Vielzahl von radial angeordneten Durchbrüchen, üblicherweise Bohrungen 7 aufweist. Die Anzahl, der die Mantelfläche des Zylinders 6 bedeckenden Bohrungen wird so gewählt, daß die in diese Bohrungen eingelassenen stabförmigen Permanentmagnete einen größtmöglichen Teil der Mantelfläche bedecken. Fixieren lassen sich die Permanent-Magnete entweder durch Kleben oder beispielsweise auch durch das Überziehen des Zylinders 6 mit einer unmagnetischen, sehr dünnen Hülle 8. Die eingesetzten Permanentmagnete sollen einen möglichst hohen $(BH)_{max}$-Wert aufweisen, beispielsweise Magnete vom Typ Seltene Erden-Kobalt, Alnico, hexagonale Ferrite, wie Bariumferrit, können verwendet werden, wobei hexagonale Ferrite bevorzugt werden. Die Anordnung der Permanentmagnete hinsichtlich ihrer Polung muß so erfolgen, daß möglichst viele Magnetfeldwechsel stattfinden. Als vorteilhaft haben sich hierbei Muster wie zum Beispiel eine hexagonale Anordnung der Permanentmagnete erwiesen. In Figur 3 ist beispielhaft eine Projektion eines Mantelflächenteilstücks dargestellt. Durch die Anordnung der Magnete ist jede Stelle der Dispersionsschicht einem Magnetfeld zeitlich variabler Richtung und Intensität ausgesetzt, das eine Vorzugsrichtung der einzelnen Magnetteilchen verhindert.

In diesem Zusammenhang ist es zweckmäßig, die Befestigung der Permanentmagnete mit Hilfe der Hülle 8 variabel zu gestalten, damit eine einfache Änderung der genannten Muster ermöglicht wird.

In einer zweckmäßigen Ausgestaltung des erfindungsgemäßen Verfahrens werden die magnetischen Teilchen in der Dispersion vor der Desorientierung mit Hilfe der erfindungsgemäßen Vorrichtung zuerst weitgehend einheitlich orientiert. Beispielhaft zeigt Figur 2 ein solches Vorgehen. Hier werden mit Hilfe einer stationären Magnetanordnung 10 durch ein in der Ebene der Dispersionsschicht verlaufendes Magnetfeld die Teilchen in der Ebene längs der Bewegungsrichtung A orientiert. In gleicher Weise läßt sich die Magnetanordnung 10 auch so gestalten, daß der Magnetfeldverlauf und damit die Orientierung der Teilchen vertikal zur Ebene der Bewegungsrichtung A erfolgt.

Die Zusammensetzung und die Herstellung der für die Fertigung von magnetischen Aufzeichnungsträgern geeignete Dispersionen ist allgemeiner Stand der Technik. Die dabei eingesetzten magnetischen Materialien sind bekannt. Es handelt sich hierbei vorzugsweise um nadelförmige magnetische Eisenoxide unterschiedlicher Zusammensetzung insbesondere unter Zusatz von Kobalt als Dotierungselement, um ferromagnetisches Chromdioxid mit üblichen Modifizierungselementen oder auch um kleinste nadelförmige ferromagnetische Metallteilchen, meist auf Eisen- und/oder Nickelbasis.

Derartige Dispersionen lassen sich für das erfindungsgemäße Verfahren heranziehen. Der besondere Vorteil des erfindungsgemäßen Verfahrens besteht gerade darin, daß damit in weitem Bereich sich unterscheidende Dispersionen in einfacher Weise eingesetzt werden können.

Dies wird insbesondere dadurch möglich, daß sich die erfindungsgemäße Vorrichtung in einem einfachen Regelkreis einbinden läßt. Wird nach der Desorientierung der magnetischen Teilchen in der Dispersion die stochastische Ausrichtung, vorzugsweise berührungslos nach dem Verfestigen der Dispersion gemessen, so kann durch diesen Meßwert sowohl die Umfangsgeschwindigkeit der Magnettrommel 3 als auch der Abstand 9 zwischen Trommel und Dispersionsschicht 2 optimal eingestellt werden.

Die mit dem erfindungsgemäßen Verfahren ermöglichte stochastische Ausrichtung der magnetischen Teilchen in der Magnetschicht zeigt sich insbesondere dann, wenn aus dem bahnförmigen magnetischen Aufzeichnungsträger anschließend magnetische Scheiben, sogenannte Floppy Disks, ausgestanzt werden. Bei solchen Disks wird die magnetische Aufzeichnung in konzentrischen Kreisbahnen vorgenommen. Wenn die Magnetschicht hier eine, wenn auch nur geringe, magnetische Vorzugsrichtung aufweisen würde, ergäbe sich bei einer Disk-Aufzeichnung eine störende Modulation des Ausgangspegels. Dies wird bei der Anwendung des erfindungsgemäßen Verfahrens ausgeschlossen. So ist bei einer Metallpigment-Floppy-Disk eine Modulation von kleiner 3 % erreichbar, während ohne Anwendung des erfindungsgemäßen Verfahrens eine Modulation von 13 % gemessen wird.

**Patentansprüche**

1. Verfahren zur Herstellung von magnetischen Aufzeichnungsträgern mit einer stochastischen Ausrichtung der magnetisch anisotropen Teilchen in der Magnetschicht durch schichtförmiges Aufbringen einer, im wesentlichen aus den in einer Lösung eines organischen Bindemittelsystems feinverteilten magnetischen Teilchen bestehenden Dispersion auf ein flexibles Trägermaterial, desorientieren der magnetisch anisotropen Teilchen in der Schicht durch eine, mit Magneten einer unterschiedlichen Polarität und mit in der Bewegungsrichtung der magnetischen Schicht abnehmenden Feldstärke versehenen Anordnung und anschließendes Verfestigen der magnetisierbaren Schicht, dadurch gekennzeichnet, daß auf die Dispersionsschicht das Magnetfeld einer rotierenden Magnettrommel mit einer die Mantelfläche der Magnettrommel im wesentlichen bedeckenden Anzahl von radial angeordneten Magneten alternierender Polarität einwirkt.

2. Verfahren gemäß Anspruch 1, dadurch gekennzeichnet, daß die magnetischen Teilchen in der Dispersionsschicht vor ihrer stochastischen Ausrichtung in einem gleichmäßig unidirektionalen Feld orientiert werden.

3. Verfahren gemäß Anspruch 1, dadurch gekennzeichnet, daß die Drehgeschwindigkeit der Magnettrommel und/oder deren Abstand von der Dispersionsschicht durch eine die stochastische Ausrichtung der magnetischen Teilchen bestimmenden Meßeinrichtung geregelt wird.

4. Vorrichtung zur Durchführung des Verfahrens gemäß Anspruch 1 bestehend aus einer, mit einem regelbaren Antrieb versehenen Achse 4, einem inneren zylinderförmigen Teil 5 aus weichmagnetischem Material und einem darüber angeordneten Hohlzylinder 6, der aus unmagnetischem Material besteht und eine Vielzahl von radial angeordneten Durchbrüchen 7 aufweist, und daß in den Durchbrüchen Permanentmagneten in alternierenden Polung enthalten sind.

5. Vorrichtung gemäß Anspruch 4, dadurch gekennzeichnet, daß die Permanentmagneten in den Durchbrüchen 7 mittels einer unmagnetischen, dünnen Hülle 8 gehalten werden.

# FIG. 1

# FIG. 2

# FIG. 3

## EINSCHLÄGIGE DOKUMENTE

EP 91116623.9

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | PATENT ABSTRACTS OF JAPAN, unexamined applications, P Field, Band 12, Nr. 243, 09. Juli 1988 THE PATENT OFFICE JAPANESE GOVERNMENT Seite 94 P 728 * Kokai-Nr. 63-34 730 (CANON INC.) * -- | 1,2 | G 11 B 5/845 G 11 B 5/84 G 11 B 5/852 |
| X | PATENT ABSTRACTS OF JAPAN, unexamined applications, P Field, Band 14, Nr. 35, 23. Jänner 1990, THE PATENT OFFICE JAPANESE GOVERNMENT Seite 152 P 994 * Kokai-Nr. 1-271 917 (MITSUBISHI SEIKO JIZAI K.K.) * -- | 1,4 | |

**RECHERCHIERTE SACHGEBIETE (Int Cl⁵)**

| Kategorie | | Betrifft Anspruch | |
|---|---|---|---|
| X | PATENT ABSTRACTS OF JAPAN, unexamined applications, P Field, Band 9, Nr. 265, 23. Oktober 1985, THE PATENT OFFICE JAPANESE GOVERNMENT Seite 76 P 399 * Kokai-Nr. 60-113 329 (TEIJIN MEMORETSUKUSU K.K.) * -- | 1 | G 11 B 5/00 H 01 F 41/00 H 01 F 13/00 |
| X | PATENT ABSTRACTS OF JAPAN, unexamined applications, P Field, Band 13, Nr. 440, 04 Oktober 1989, THE PATENT OFFICE JAPANESE GOVERNMENT Seite 138 P 940 * Kokai-Nr. 1-169 725 (CANON INC.) * ---- | 1 | |

Der vorliegende Recherchenbericht wurde für alle Patentansprüche erstellt.

| Recherchenort | Abschlußdatum der Recherche | Prüfer |
|---|---|---|
| WIEN | 19-12-1991 | BERGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82